# EUROPÄISCHE PATENTSCHRIFT

(11) **EP 3 345 720 B1**
(45) Veröffentlichungstag und Bekanntmachung des Hinweises auf die Patenterteilung: **28.08.2019**
(21) Anmeldenummer: 17206646.6
(22) Anmeldetag: 12.12.2017
(51) Int. Cl.: B23P 19/00, B65G 47/06

(54) **TRENNUNGSEINHEIT**
SEPARATION UNIT
UNITÉ DE SÉPARATION

(30) Priorität: 10.01.2017 DE 102017100385
(43) Veröffentlichungstag der Anmeldung: 11.07.2018
(73) Patentinhaber: Weber Schraubautomaten GmbH, 82515 Wolfratshausen (DE)
(72) Erfinder: Wiethoff, Ralf, 82362 Weilheim (DE); Hartmann, Jochen, 83646 Bad Tölz (DE)
(74) Vertreter: Manitz Finsterwald Patent- und Rechtsanwaltspartnerschaft mbB

(56) Entgegenhaltungen:
- EP-A1- 0 644 017
- JP-A- S6 061 411
- JP-A- H02 139 133
- JP-U- S4 892 676
- JP-U- H02 105 919
- US-A1- 2003 116 038
- US-B1- 6 357 109

## Beschreibung

Die vorliegende Erfindung betrifft eine Trennungseinheit für eine Zuführvorrichtung für Fügeelemente, insbesondere Schrauben, insbesondere fließlochformende Schrauben.

Trennungseinheiten dienen in Fügesystemen beispielsweise dazu, in einem Magazin vorrätig gehaltene Fügeelemente zu separieren, welche dann mittels einer Zuführvorrichtung einer Fügevorrichtung, wie zum Beispiel einer Schraubvorrichtung, zugeführt werden können. Dort wird das Fügemittel mit Hilfe der Fügevorrichtung an einem zu fügenden Bauteil zur Anlage gebracht und in Drehung versetzt, so dass sich durch die dabei entstehende Reibungswärme sowie durch den Vortrieb des Fügemittels ein Fließloch bildet. Hierbei ist es von Bedeutung, dass das Fügemittel härter bzw. fester als das zu fügende Bauteil ist, wobei es sich als besonders günstig erweist, wenn das Fügeelement, insbesondere eine dem zu fügenden Bauteil zugewandte Spitze des Fügeelements, vergütet ist, z.B. eine hochfeste Beschichtung aufweist. Üblicherweise sind hochfeste Beschichtungen spröde, was bei einer, insbesondere schlagartigen, Krafteinwirkung auf das Fügeelement, z.B. durch ungewollte Kollision mit einem harten Gegenstand, dazu führen kann, dass sich die Beschichtung von dem Fügeelement ablöst. Dies ist insofern problematisch, als ein Ablösen der Beschichtung, insbesondere im Bereich der Spitze des Fügeelements, zur Folge haben kann, dass die Leistungsfähigkeit des Fügeelements herabgesetzt ist oder das Fügeelement gänzlich unbrauchbar wird, wodurch letztendlich auch der Fügeprozess und die Qualität der resultierenden Fügestelle beeinträchtigt ist.

Um eine beschichtete Spitze eines Fügeelements während der Zuführung zu der Fügevorrichtung zu schützen, ist es bekannt, das Fügeelement vor der Zuführung zu der Fügevorrichtung pneumatisch zu verdrehen und der Fügevorrichtung mit dem Kopf voraus zuzuführen.

Bekannte pneumatische Drehvorrichtungen sind jedoch aufwendig in ihrer Konstruktion, kostenintensiv und können störanfällig sein.

Überdies sind auch Trennungseinheiten mit einer mechanischen Drehvorrichtung bekannt. Eine derartige Trennungseinheit mit den Merkmalen des Oberbegriffs des Anspruchs 1 ist in der JP S60 61411 A offenbart. Überdies sind weitere Trennungseinheiten bekannt, wie z.B. aus der JP H02 139133 A, US 6,357,109 B1, US 2003/0116038 A, EP 0 644 017 A1, JP H02 105919 U oder JP S48 92676 U.

Eine Aufgabe der Erfindung ist es, eine Alternative zu den pneumatischen Drehvorrichtungen zu schaffen, welche deren Nachteile überwindet. Eine weitere Aufgabe der Erfindung besteht darin, eine zuverlässig funktionierende Trennungseinheit mit einfachem Aufbau zu schaffen.

Zur Lösung der Aufgaben ist eine Trennungseinheit mit den Merkmalen des Anspruchs 1 vorgesehen.

Die erfindungsgemäße Trennungseinheit für eine Zuführvorrichtung für Fügeelemente, insbesondere Schrauben, insbesondere fließlochformende Schrauben, umfasst eine Fügeelementaufnahme zur Aufnahme eines einen Kopf und einen Schaft aufweisenden Fügeelements, einen relativ zu der Fügeelementaufnahme zwischen einer Aufnahmestellung und einer Abgabestellung verschiebbaren Schieber und ein Drehelement, um welches das in der Fügeelementaufnahme aufgenommene Fügeelement bei einer Verschiebung des Schiebers drehbar ist.

Die Erfindung zeichnet sich dadurch aus, dass eine Verschiebung des Schiebers aus der Aufnahmestellung in Richtung dessen Abgabestellung den Schaft des in der Fügeelementaufnahme aufgenommenen Fügeelements mit dem Drehelement in Eingriff bringt und das Fügeelement um das Drehelement dreht.

Der Erfindung liegt der allgemeine Gedanke zugrunde, ein Fügeelement nicht pneumatisch, sondern mechanisch zu drehen, und zwar mittels einer ohnehin vorhandenen Trennungseinheit. Die Trennungseinheit erfüllt hierbei eine Doppelfunktion, indem sie sowohl zur Vereinzelung der einer Fügevorrichtung zuzuführenden Fügeelemente als auch zu deren Verdrehung dient. Hieraus ergibt sich der Vorteil, dass sich die Drehung der einzelnen Fügeelemente insgesamt einfacher sowie kostengünstiger realisieren lässt.

Eine mechanische Drehung des Fügeelements mit Hilfe des Schiebers liegt hierbei auch dann vor, wenn der Schieber fluidtechnisch, zum Beispiel hydraulisch oder besonders bevorzugt pneumatisch, betätigt wird. Grundsätzlich ist es auch denkbar, den Schieber mit Hilfe eines Elektromotors zu verschieben. Die Drehung des Fügeelements als solche erfolgt in allen Fällen letztlich jedoch rein mechanisch.

Vorteilhafterweise weist die erfindungsgemäße Trennungseinheit gleiche äußere Abmessungen auf wie eine herkömmliche Trennungseinheit ohne Drehmöglichkeit, so dass sich eine herkömmliche Trennungseinheit eines bestehenden Fügesystems leicht gegen eine erfindungsgemäße Trennungseinheit austauschen lässt. Dies wird dadurch weiter begünstigt, dass zur Ansteuerung der erfindungsgemäßen Trennungseinheit die gleichen Signale verwendet werden können wie für eine herkömmliche Trennungseinheit.

Vorzugsweise ist die Fügeelementaufnahme ortsfest angebracht und der Schieber relativ zu der Fügeelementaufnahme verschiebbar. Prinzipiell ist aber auch denkbar, dass umgekehrt der Schieber ortsfest angebracht ist und die Fügeelementaufnahme in Bezug auf den Schieber bewegbar ist. Überdies können auch beide Bauteile, d.h. sowohl die Fügeelementaufnahme als auch der Schieber, relativ zueinander bewegbar sein.

Bei den Fügeelementen kann es sich um Schrauben handeln, insbesondere Metallschrauben, um Elemente, die in Direktverschraubungs- bzw. fließlochformenden Prozessen verarbeitet werden, oder auch um gewindefreie Setzelemente, die in Reibschweißprozessen verarbeitet werden und aus einem Metallmaterial oder auch aus einem Kunststoffmaterial bestehen können.

Die Zuführvorrichtung kann eine Röhre oder einen Schlauch umfassen, welche bzw. welcher die Trennungseinheit mit der Fügevorrichtung verbindet und die Zuführung eines vereinzelten und gedrehten Fügeelements zu derselben ermöglicht.

Vorteilhafte Ausbildungen der Erfindung sind den Unteransprüchen, der Beschreibung und den Zeichnungen zu entnehmen.

Vorzugsweise lässt sich der Schieber zwischen einer Aufnahmestellung und einer Abgabestellung verschieben, wobei das Fügeelement in der Aufnahmestellung des Schiebers von der Fügeelementaufnahme in einer ersten Ausrichtung aufnehmbar ist und in der Abgabestellung des Schiebers in einer bezüglich der ersten Ausrichtung gedrehten zweiten Ausrichtung ausgerichtet ist.

Das Drehelement kann eine Drehachse definieren, um welche sich das in der Fügeelementaufnahme aufgenommene Fügeelement drehen lässt. Dabei ist die Drehachse bevorzugt zumindest annähernd senkrecht zu einer Längsmittelachse des in der Fügeelementaufnahme aufgenommenen Fügeelements ausgerichtet, so dass eine Drehung des in der Fügeelementaufnahme aufgenommenen Fügeelements zumindest annähernd senkrecht zur Drehachse des Drehelements erfolgt. Es ist aber auch denkbar, dass das in der Fügeelementaufnahme aufgenommene Fügeelement auch unter einem von einem senkrechten Winkel abweichenden anderen Winkel um die Drehachse des Drehelements, also gewissermaßen quer zu der Drehachse, gedreht werden kann.

Gemäß einer vorteilhaften Ausführungsform ist das Drehelement durch einen, insbesondere zylindrischen, Drehbolzen gebildet, welcher zumindest annähernd senkrecht zu einer Längsmittelachse des in der Fügeelementaufnahme aufgenommenen Fügeelements ausgerichtet ist. Es ist aber auch denkbar, dass das Drehelement eine beliebige andere Form aufweisen kann, wie z.B. eine Kugelform oder eine arbiträre prismatische Form.

Besonders vorteilhaft ist es, wenn die Fügeelementaufnahme eine Führung für das von der Fügeelementaufnahme aufgenommene Fügeelement aufweist, um das Fügeelement während dessen Drehung zu führen. Dabei kann die Führung als eine Führungsbahn ausbildet sein, entlang welcher der Kopf des Fügeelements, insbesondere eine dem Schaft des Fügeelements zugewandte Unterseite des Kopfes, während der Drehung des Fügeelements läuft. Die Führungsbahn kann sich zumindest teilweise kreisförmig um das Drehelement erstrecken.

Eine besonders günstige Führung des Fügeelements während dessen Drehung lässt sich erreichen, wenn die Führungsbahn durch zwei zumindest annähernd parallel zueinander ausgerichtete Führungswände gebildet ist, welche den Schaft eines in der Fügeelementaufnahme aufgenommenen Fügeelements zwischen sich aufnehmen.

Zur besseren Verdrehung des in der Fügeelementaufnahme aufgenommenen Fügeelements kann ein sich zumindest annähernd parallel zu einer Verschiebungsrichtung des Schiebers erstreckender Fortsatz an dem Schieber ausgebildet sein, welcher bei einer Verschiebung des Schiebers aus der Aufnahmestellung in die Abgabestellung mit dem Fügeelement, insbesondere mit dem Kopf des Fügeelements, in Eingriff bringbar ist.

Damit eine dem Kopf des Fügeelements gegenüberliegende, an dem Schaft ausgebildete Spitze bei einer Drehung des in der Fügeelementaufnahme aufgenommenen Fügeelements weder die Fügeelementaufnahme noch den Fortsatz berührt, können sowohl an der Fügeelementaufnahme als auch an dem Fortsatz Aussparungen für das Fügeelement vorgesehen sein, in welche die Spitze bei einer Drehung des Fügeelements eintauchen kann. Die Fügeelementaufnahme kann dabei auf einer der Führungsbahn gegenüberliegenden Seite des Drehelements eine Aussparung für das Fügeelement aufweisen, wohingegen der Fortsatz an einer dem Drehelement zugewandten Unterseite eine Aussparung für das Fügeelement aufweisen kann.

Um zu verhindern, dass ein weiteres Fügeelement während einer Drehung eines in der Fügeelementaufnahme aufgenommenen Fügeelements in die Fügeelementaufnahme gelangt, kann ein Riegel an dem Schieber ausgebildet sein, welcher während einer Bewegung des Schiebers in dessen Abgabestellung eine Eintrittsöffnung der Fügeelementaufnahme für den Eintritt eines weiteren Fügeelements blockiert. Vorteilhafterweise erstreckt sich der Riegel zumindest annähernd parallel zu einer Bewegungsrichtung des Schiebers.

Zur Abgabe eines gedrehten Fügeelements kann die Fügeelementaufnahme eine Abgabeöffnung aufweisen, durch welche das von der Fügeelementaufnahme aufgenommene Fügeelement in der Abgabestellung des Schiebers abgebbar ist.

Eine sichere Führung des Schiebers während dessen Verschiebung relativ zu der Fügeelementaufnahme lässt sich vorteilhafterweise dadurch erreichen, dass der Schieber mittels einer Führungseinrichtung an der Fügeelementaufnahme verschiebbar gelagert ist.

Nachfolgend wird die Erfindung rein beispielhaft anhand einer möglichen Ausführungsform unter Bezugnahme auf die beigefügten Zeichnungen beschrieben. Es zeigen:
- Fig. 1: eine perspektivische Ansicht einer erfindungsgemäßen Trennungseinheit, mit einem sich in einer Aufnahmestellung befindlichen Schieber;
- Fig. 2: eine Längsschnittansicht der Darstellung von Fig. 1;
- Fig. 3: eine perspektivische Ansicht der Trennungseinheit von Fig. 1, wobei sich der Schieber in einer Zwischenstellung befindet;
- Fig. 4: eine Längsschnittansicht der Darstellung von Fig. 3;
- Fig. 5: eine perspektivische Ansicht der Trennungseinheit von Fig. 1, wobei sich der Schieber in einer Abgabestellung befindet; und
- Fig. 6: eine Längsschnittansicht der Darstellung von Fig. 5.

Die Figuren zeigen eine Trennungseinheit einer Zuführvorrichtung für Fügeelemente 10, welche jeweils einen Kopf 14 und einen Schaft 16 aufweisen. Bei den Fügeelementen 10 handelt es sich vorzugsweise um Schrauben, insbesondere fließlochformende Schrauben, welche aus einem Metallmaterial oder auch aus einem Kunststoffmaterial bestehen können und welche insbesondere im Bereich ihrer Spitzen 24 eine hochfeste Beschichtung aufweisen.

Die Trennungseinheit umfasst eine Fügeelementaufnahme 12 zur Aufnahme eines Fügeelements 10, einen relativ zu der Fügeelementaufnahme 12 verschiebbaren Schieber 18 und ein Drehelement 20, um welches das in der Fügeelementaufnahme 12 aufgenommene Fügeelement 10 bei einer Verschiebung des Schiebers 18 drehbar ist. Überdies weist die Trennungseinheit ein Anschlusselement 22 auf, an welches ein in den Figuren nicht dargestellter Schlauch anschließbar ist, mittels welchem das von der Trennungseinheit abgegebene Fügeelement 10 einer Fügevorrichtung zuführbar ist.

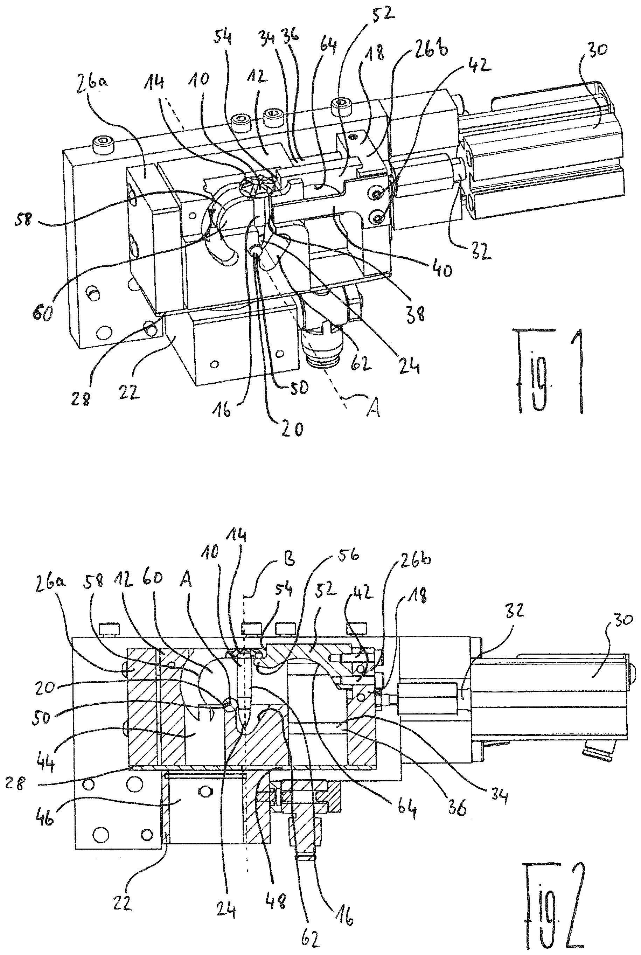

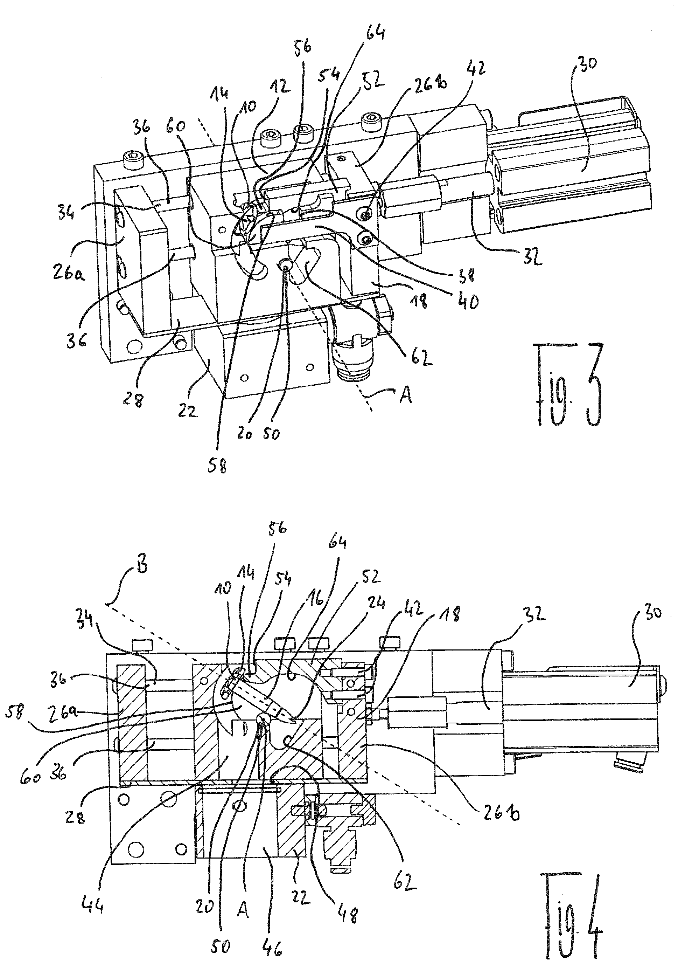

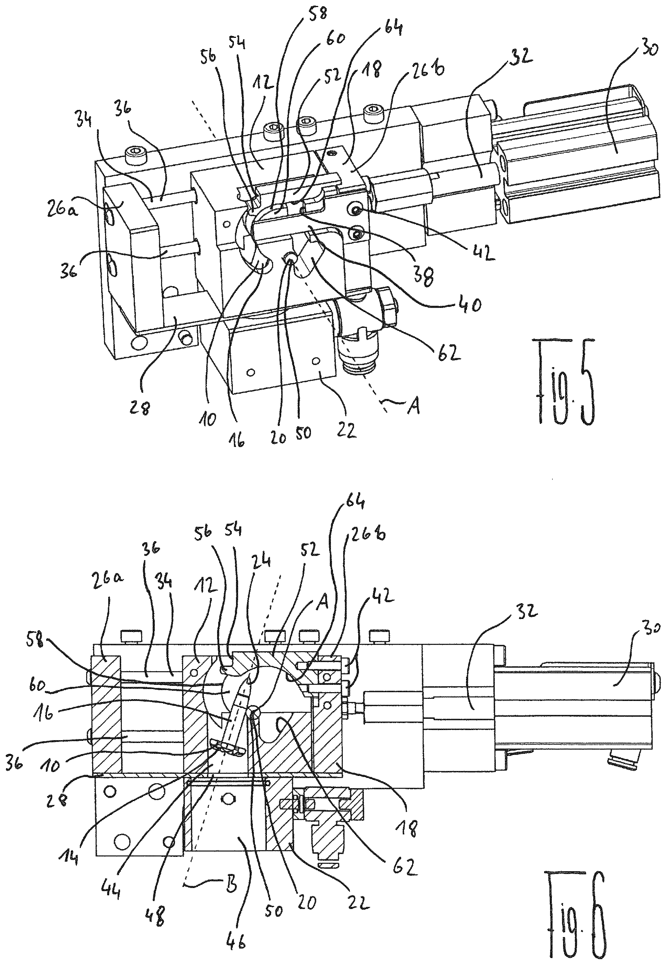

Der Schieber 18 ist zwischen einer Aufnahmestellung (Fig. 1 und 2) und einer Abgabestellung (Fig. 5 und 6) verschiebbar, wobei Fig. 3 und 4 rein beispielhaft eine Zwischenstellung des Schiebers 18 zwischen dessen Aufnahme- und Abgabestellung zeigen. Von Fig. 1 über Fig. 3 nach Fig. 5 (bzw. von Fig. 2 über Fig. 4 nach Fig. 6) ist also eine Bewegungsabfolge dargestellt, während der Schieber 18 von rechts nach links aus dessen Aufnahmestellung in seine Abgabestellung verschoben wird.

Die Aufnahmestellung und die Abgabestellung des Schiebers 18 sind durch zwei zueinander parallel ausgerichtete und sich senkrecht zur Verschiebungsrichtung des Schiebers 18 erstreckende Anschläge 26a, 26b definiert, welche über eine gemeinsame zwischen der Fügeelementaufnahme 12 und dem Anschlusselement 22 verlaufende Bodenplatte 28 verbunden sind. Es versteht sich, dass der Schieber 18 grundsätzlich aber auch ohne Bodenplatte ausgebildet sein kann.

Zur Verschiebung des Schiebers 18 ist ein pneumatisch betätigter Antrieb 30 vorgesehen, z.B. ein Pneumatikzylinder, welcher den Schieber 18 mittels eines Kolbens 32 zwischen der Aufnahme- und Abgabestellung verschiebt. Überdies ist der Schieber 18 an der Fügeelementaufnahme 12 mittels einer Führungseinrichtung 34 verschiebbar gelagert, welche, wie insbesondere anhand von Fig. 2 bis 6 zu erkennen ist, durch zwei parallel zueinander ausgerichtete und sich in Verschiebungsrichtung des Schiebers 18 erstreckende Führungsstangen 36 gebildet ist.

Die Fügeelementaufnahme 12 weist eine Eintrittsöffnung 38 auf, durch welche ein Fügeelement 10 in die Fügeelementaufnahme 12 eintritt. Um den Eintritt eines weiteren Fügeelements 10 während eines Drehvorgangs eines bereits in der Fügeelementaufnahme 12 aufgenommenen Fügeelements 10 zu verhindern, ist an dem Schieber 18 ein sich parallel zur Verschiebungsrichtung des Schiebers 18 erstreckender Riegel 40 ausgebildet, welcher die Eintrittsöffnung 38 bei einer Verschiebung des Schiebers 18 aus dessen Aufnahmestellung in die Abgabestellung blockiert (Fig. 3 und 5). In dem dargestellten Ausführungsbeispiel ist der Riegel 40 mittels eines Befestigungsmittels, hier zwei Schrauben 42, an dem die Abgabestellung des Schiebers 18 definierenden Anschlag 26b angebracht. Es versteht sich, dass der Riegel 40 auch auf andere Weise an dem Schieber 18 befestigt sein kann, zum Beispiel stoffschlüssig mittels eines Klebstoffes. Überdies ist auch denkbar, dass der Riegel 40 einstückig mit dem Schieber 18 ausgebildet sein kann.

Des Weiteren weist die Fügeelementaufnahme 12 eine Abgabeöffnung 44 auf, welche dazu dient, gedrehte Fügeelemente 10 abzugeben. Die Abgabeöffnung 44 mündet in eine Aufnahmeöffnung 46 des Anschlusselements 22. Wie anhand von Fig. 6 zu erkennen ist, fluchtet in der Abgabestellung des Schiebers 18 eine in der Bodenplatte 28 vorgesehene Öffnung 48 des Schiebers 18 mit der Abgabeöffnung 44 und kann so ein gedrehtes Fügeelement 10 frei geben.

Wie bereits erwähnt erfolgt die Drehung des Fügeelements 10 um ein Drehelement 20, welches hier in Form eines Drehbolzens 50 ausgebildet ist. Das Drehelement 20 definiert eine Drehachse A, um welche ein in der Fügeelementaufnahme 12 aufgenommenes Fügeelement 10 verdrehbar ist und welche zumindest annähernd senkrecht zu einer Längsmittelachse B (Fig. 2, 4 und 6) des in der Fügeelementaufnahme 12 aufgenommenen Fügeelements 10 ausgerichtet ist. Mit anderen Worten ist der Drehbolzen 50 zumindest annähernd senkrecht zu der Längsmittelachse B des in der Fügeelementaufnahme 12 aufgenommenen Fügeelements 10 ausgerichtet.

Ferner ist an dem Schieber 18 ein sich zumindest annähernd parallel zu der Verschiebungsrichtung erstreckender Fortsatz 52 vorgesehen, welcher mit dem Kopf 14 des Fügeelements 10 in Eingriff bringbar ist. In dem vorliegenden Ausführungsbeispiel ist der Fortsatz 52 an dem die Abgabestellung des Schiebers 18 definierenden Anschlag 26b angebracht, hier mittels zweier Schrauben 42. Es versteht sich, dass der Fortsatz 52 aber auch stoffschlüssig mit dem Schieber 18 verbunden oder einstückig mit dem Schieber 18 ausgebildet sein kann. Der Fortsatz 52 weist eine dem in der Aufnahmestellung in der Fügeelementaufnahme 12 aufgenommenen, d.h. ungedrehten, Fügeelement 10 zugewandte Stirnfläche 54 auf, aus welcher ein sich in Richtung der Verschiebungsrichtung des Schiebers 18 erstreckender Kragen 56 hervorgeht.

In der Aufnahmestellung ist der Kragen 56 fluchtend mit einer als Führungsbahn 58 ausgebildeten Führung ausgerichtet (Fig. 2), welche dazu dient das in der Fügeelementaufnahme 12 aufgenommene Fügeelement 10 während dessen Drehung zu führen. Die Führungsbahn 58 erstreckt sich zumindest teilweise kreisförmig um die Drehachse A des Drehelements 20 und weist ferner zwei parallel zueinander ausgerichtete Führungswände 60 auf, welche den Schaft 16 eines in der Fügeelementaufnahme 12 aufgenommenen Fügeelements 10 zwischen sich aufnehmen und zwischen welchen der Fortsatz 52 bei einer Verschiebung des Schiebers 18 bewegbar ist.

Damit die beschichte Spitze 24 des Fügeelements 10 während dessen Drehung weder mit der Fügeelementaufnahme 12 noch mit dem Fortsatz 52 in Kontakt gerät, weisen sowohl die Fügeelementaufnahme 12 als auch der Fortsatz 52 jeweils eine Aussparung 62, 64 auf.

Die Aussparung 62 der Fügeelementaufnahme 12 erstreckt sich ausgehend von dem Drehelement 20 nach unten in Richtung der Bodenplatte 28 des Schiebers 18 bzw. des Anschlusselements 22 und weist im Längsschnitt der Trennungseinheit betrachtet eine V-Form auf (Fig. 2, 4 und 6). Der Fortsatz 52 weist dahingegen auf seiner dem Drehelement 20 zugewandten Unterseite eine bogenförmige Aussparung 64 auf. Es ist denkbar, dass die jeweiligen Aussparungen 62, 64 auch eine anders geartete Formgebung aufweisen können, solange die Spitze 24 des Fügeelements 10 die Fügeelementaufnahme 12 bzw. den Fortsatz 52 während einer Drehung des Fügeelements 10 nicht berührt.

Nachfolgend wird anhand der in den Figuren dargestellten Bewegungsabfolge eine Drehung eines in der Fügeelementaufnahme 12 aufgenommenen Fügeelements 10 erläutert.

In der in Fig. 1 bzw. Fig. 2 dargestellten Aufnahmestellung des Schiebers 18 wird ein Fügeelement 10 von der Fügeelementaufnahme 12 in einer vertikalen ersten Ausrichtung aufgenommen, wobei der Kopf 14 des Fügeelements 10 auf seiner dem Schaft 16 zugewandten Unterseite einerseits von der Führungsbahn 58 und andererseits von dem Kragen 56 derart gehalten wird, dass die Spitze 24 des Schaftes 16 berührungsfrei in die Aussparung 62 der Fügeelementaufnahme 12 eintaucht. Durch eine anschließende Verschiebung des Schiebers 18 in Richtung dessen Abgabestellung gerät der Schaft 16 des Fügeelements 10 mit dem Drehbolzen 50 in Eingriff und das Fügeelement 10 wird um das Drehelement 20 gedreht, während die Unterseite des Kopfes 14 auf der Führungsbahn 58 aufläuft (Fig. 3 und 4). Ist der Schieber 18 in dessen Abgabestellung angelangt (Fig. 5 und 6), ist das Fügeelement 10 bezüglich seiner ersten Ausrichtung in eine dazu schräge zweite Ausrichtung gedreht und das Fügeelement 10 fällt schwerkraftbedingt kopfüber in das Anschlusselement 22, von wo es über den nicht dargestellten Schlauch der Fügeeinrichtung zugeführt werden kann. Es versteht sich, dass sich das Fügeelement 10 nicht nur schwerkraftbedingt aus der Fügeelementaufnahme 12 entfernen lässt, sondern beispielsweise auch mittels Druckluft.

Über den Schlauch gelangt das umgedrehte Fügeelement 10 mit dem Kopf 14 voraus zu der Fügevorrichtung, wo es von einer der Fügevorrichtung vorgeschalteten Dreheinrichtung (nicht gezeigt) wieder in eine Ausrichtung gedreht wird, in welcher die Spitze 24 voraus weist. Zwischenzeitlich wird der Schieber 18 wieder in seine Aufnahmestellung zurückgeschoben, so dass ein nachfolgendes Fügeelement 10 in der Fügeelementaufnahme 12 der Trennungseinheit aufgenommen und gedreht werden kann.

### Bezugszeichenliste

- 10: Fügeelement
- 12: Fügeelementaufnahme
- 14: Kopf
- 16: Schaft
- 18: Schieber
- 20: Drehelement
- 22: Anschlusselement
- 24: Spitze
- 26: Anschlag
- 28: Bodenplatte
- 30: Antrieb
- 32: Kolben
- 34: Führungseinrichtung
- 36: Führungsstange
- 38: Eintrittsöffnung
- 40: Riegel
- 42: Schraube
- 44: Abgabeöffnung
- 46: Aufnahmeöffnung
- 48: Öffnung
- 50: Drehbolzen
- 52: Fortsatz
- 54: Stirnfläche
- 56: Kragen
- 58: Führungsbahn
- 60: Führungswand
- 62: Aussparung
- 64: Aussparung

- A: Drehachse
- B: Längsmittelachse

## Patentansprüche

1. Trennungseinheit für eine Zuführvorrichtung für Fügeelemente (10), insbesondere Schrauben, insbesondere fließlochformende Schrauben, mit einer Fügeelementaufnahme (12) zur Aufnahme eines einen Kopf (14) und einen Schaft (16) aufweisenden Fügeelements (10), einem relativ zu der Fügeelementaufnahme (12) zwischen einer Aufnahmestellung und einer Abgabestellung verschiebbaren Schieber (18) und einem Drehelement (20), um welches das in der Fügeelementaufnahme (12) aufgenommene Fügeelement (10) bei einer Verschiebung des Schiebers (18) drehbar ist,
**dadurch gekennzeichnet, dass**
eine Verschiebung des Schiebers (18) aus der Aufnahmestellung in Richtung dessen Abgabestellung den Schaft (16) des in der Fügeelementaufnahme (12) aufgenommenen Fügeelements (10) mit dem Drehelement (20) in Eingriff bringt und das Fügeelement (10) um das Drehelement (20) dreht.

2. Trennungseinheit nach Anspruch 1,
**dadurch gekennzeichnet, dass**
das Fügeelement (10) in der Aufnahmestellung des Schiebers (18) von der Fügeelementaufnahme (12) in einer ersten Ausrichtung aufnehmbar ist und in der Abgabestellung des Schiebers (18) in einer bezüglich der ersten Ausrichtung gedrehten zweiten Ausrichtung ausgerichtet ist.

3. Trennungseinheit nach Anspruch 1 oder 2,
**dadurch gekennzeichnet, dass**
das Drehelement (20) eine Drehachse (A) für das in der Fügeelementaufnahme (12) aufgenommene Fügeelement (10) definiert, welche zumindest annähernd senkrecht zu einer Längsmittelachse (B) des in der Fügeelementaufnahme (12) aufgenommenen Fügeelements (10) ausgerichtet ist.

4. Trennungseinheit nach zumindest einem der vorstehenden Ansprüche,
**dadurch gekennzeichnet, dass**
das Drehelement (20) durch einen Drehbolzen (50) gebildet ist, welcher zumindest annähernd senkrecht zu einer Längsmittelachse (B) des in der Fügeelementaufnahme (12) aufgenommenen Fügeelements (10) ausgerichtet ist.

5. Trennungseinheit nach zumindest einem der vorstehenden Ansprüche,
**dadurch gekennzeichnet, dass**
die Fügeelementaufnahme (12) eine Führung für das von der Fügeelementaufnahme (12) aufgenommene Fügeelement (10) aufweist, welche dazu dient, das Fügeelement (10) während dessen Drehung zu führen.

6. Trennungseinheit nach Anspruch 5,
**dadurch gekennzeichnet, dass**
die Führung eine Führungsbahn (58) ausbildet, entlang welcher der Kopf (14) des Fügeelements (10) während der Drehung des Fügeelements (10) läuft.

7. Trennungseinheit nach Anspruch 6,
**dadurch gekennzeichnet, dass**
sich die Führungsbahn (58) zumindest teilweise kreisförmig um das Drehelement (20) erstreckt.

8. Trennungseinheit nach Anspruch 6 oder 7,
**dadurch gekennzeichnet, dass**
die Führungsbahn (58) durch zwei zumindest annähernd parallel zueinander ausgerichtete Führungswände (60) gebildet ist, welche den Schaft (16) eines in der Fügeelementaufnahme (12) aufgenommenen Fügeelements (10) zwischen sich aufnehmen.

9. Trennungseinheit nach zumindest einem der Ansprüche 6 bis 8,
**dadurch gekennzeichnet, dass**
die Fügeelementaufnahme (12) auf einer der Führungsbahn (58) gegenüberliegenden Seite des Drehelements (20) eine Aussparung (62) für das Fügeelement (10) aufweist.

10. Trennungseinheit nach zumindest einem der Ansprüche 2 bis 9,
**dadurch gekennzeichnet, dass**
ein sich zumindest annähernd parallel zu einer Verschiebungsrichtung des Schiebers (18) erstreckender Fortsatz (52) an dem Schieber (18) ausgebildet ist, welcher bei einer Verschiebung des Schiebers (18) aus der Aufnahmestellung in die Abgabestellung mit dem Fügeelement (10) in Eingriff bringbar ist.

11. Trennungseinheit nach Anspruch 10,
**dadurch gekennzeichnet, dass**
der Fortsatz (52) an einer dem Drehelement (20) zugewandten Unterseite eine Aussparung (64) für das Fügeelement (10) aufweist.

12. Trennungseinheit nach zumindest einem der Ansprüche 2 bis 11,
**dadurch gekennzeichnet, dass**
ein Riegel (40), insbesondere ein sich zumindest annähernd parallel zu einer Bewegungsrichtung des Schiebers (18) erstreckender Riegel (40), an dem Schieber (18) ausgebildet ist, welcher während einer Bewegung des Schiebers (18) in dessen Abgabestellung eine Eintrittsöffnung (38) der Fügeelementaufnahme (12) für den Eintritt eines weiteren Fügeelements (10) blockiert.

13. Trennungseinheit nach zumindest einem der Ansprüche 2 bis 12,
**dadurch gekennzeichnet, dass**
die Fügeelementaufnahme (12) eine Abgabeöffnung (44) aufweist, durch welche das von der Fügeelementaufnahme (12) aufgenommene Fügeelement (10) in der Abgabestellung des Schiebers (18) abgebbar ist.

14. Trennungseinheit nach zumindest einem der vorstehenden Ansprüche,
**dadurch gekennzeichnet, dass**
der Schieber (18) mittels einer Führungseinrichtung (34) an der Fügeelementaufnahme (12) verschiebbar gelagert ist.

## Claims

1. A separation unit for a feed apparatus for joining elements (10), in particular screws, in particular flow-drilling screws, comprising a joining element receiver (12) for receiving a joining element (10) having a head (14) and a shaft (16); a slider (18) displaceable relative to the joining element receiver (12) between a receiving position and an output position; and a rotational element (20) about which the joining element (10) received in the joining element receiver (12) is rotatable on a displacement of the slider (18),
**characterized in that**
a displacement of the slider (18) from the receiving position in the direction of its output position brings the shaft (16) of the joining element (10) received in the joining element receiver (12) into engagement with the rotational element (20) and rotates the joining element (10) about the rotational element (20).

2. A separation unit in accordance with claim 1,
**characterized in that**
the joining element (10) is receivable by the joining element receiver (12) in a first alignment in the receiving position of the slider (18) and is aligned in a second alignment rotated with respect to the first alignment in the output position of the slider (18).

3. A separation unit in accordance with claim 1 or claim 2,
**characterized in that**
the rotational element (20) defines an axis of rotation (A) for the joining element (10) received in the joining element receiver (12), which axis of rotation (A) is aligned at least approximately perpendicular to a longitudinal center axis (B) of the joining element (10) received in the joining element receiver (12).

4. A separation unit in accordance with at least one of the preceding claims,
**characterized in that**
the rotational element (20) is formed by a rotating pin (50) which is aligned at least approximately perpendicular to a longitudinal center axis (B) of the joining element (10) received in the joining element receiver (12).

5. A separation unit in accordance with at least one of the preceding claims,
**characterized in that**
the joining element receiver (12) has a guide for the joining element (10) received by the joining element receiver (12) that serves to guide the joining element (10) during its rotation.

6. A separation unit in accordance with claim 5,
**characterized in that**
the guide forms a guide track (58) along which the head (14) of the joining element (10) runs during the rotation of the joining element (10).

7. A separation unit in accordance with claim 6,
**characterized in that**
the guide track (58) extends at least partly in circular form about the rotational element (20).

8. A separation unit in accordance with claim 6 or claim 7,
**characterized in that**
the guide track (58) is formed by two guide walls (60) which are aligned at least approximately in parallel with one another and which receive the shaft (16) of a joining element (10) received in the joining element receiver (12) between them.

9. A separation unit in accordance with at least one of the claims 6 to 8,
**characterized in that**
the joining element receiver (12) has a cut-out (62) for the joining element (10) at a side of the rotational element (20) disposed opposite the guide track (58).

10. A separation unit in accordance with at least one of the claims 2 to 9,
**characterized in that**
a prolongation (52) which extends at least approximately in parallel with a direction of displacement of the slider (18) is formed at the slider (18) and can be brought into engagement with the joining element (10) on a displacement of the slider (18) from the receiving position into the output position.

11. A separation unit in accordance with claim 10,
**characterized in that**
the prolongation (52) has a cut-out (64) for the joining element (10) at a lower side facing the rotational element (20).

12. A separation unit in accordance with at least one of the claims 2 to 11,
**characterized in that**
a latch (40), in particular a latch (40) extending at least approximately in parallel with a direction of movement of the slider (18), is formed at the slider (18) and blocks an inlet opening (38) of the joining element receiver (12) for the entry of a further joining element (10) during a movement of the slider (18) into its output position.

13. A separation unit in accordance with at least one of the claims 2 to 12,
**characterized in that**
the joining element receiver (12) has an output opening (44) through which the joining element (10) received by the joining element receiver (12) can be output in the output position of the slider (18).

14. A separation unit in accordance with at least one of the preceding claims,
**characterized in that**
the slider (18) is displaceably supported at the joining element receiver (12) by means of a guide device (34).

## Revendications

1. Unité de séparation pour un dispositif d'alimentation d'éléments d'assemblage, en particulier de vis, en particulier de vis de fluo-perçage, comportant un logement d'élément d'assemblage (12) pour loger un élément d'assemblage (10) pourvu d'une tête (14) et d'une tige (16), un coulisseau (18) mobile en translation par rapport au logement d'élément d'assemblage (12) entre une position de réception et une position de distribution, et un élément de rotation (20) autour duquel l'élément d'assemblage (10) logé dans le logement d'élément d'assemblage (12) peut tourner lors d'une translation du coulisseau (18),
**caractérisée en ce que**
une translation du coulisseau (18) depuis la position de réception en direction de sa position de distribution fait que la tige (16) de l'élément d'assemblage (10) logé dans le logement d'élément d'assemblage (12) vienne en engagement avec l'élément de rotation (20) et que l'élément d'assemblage (10) tourne autour de l'élément de rotation (20).

2. Unité de séparation selon la revendication 1,
**caractérisée en ce que**
dans la position de réception du coulisseau (18), l'élément d'assemblage (10) est susceptible d'être logé par le logement d'élément d'assemblage (12) dans une première orientation, et dans la position de distribution du coulisseau (18), il est orienté dans une seconde orientation tournée par rapport à la première orientation.

3. Unité de séparation selon la revendication 1 ou 2,
**caractérisée en ce que**
l'élément de rotation (20) définit un axe de rotation (A) pour l'élément d'assemblage (10) logé dans le logement d'élément d'assemblage (12), axe qui est orienté au moins approximativement perpendiculairement à un axe longitudinal central (B) de l'élément d'assemblage (10) logé dans le logement d'élément d'assemblage (12).

4. Unité de séparation selon l'une au moins des revendications précédentes,
**caractérisée en ce que**
l'élément de rotation (20) est formé par un pivot (50) qui est orienté au moins approximativement perpendiculairement à un axe longitudinal central (B) de l'élément d'assemblage (10) logé dans le logement d'élément d'assemblage (12).

5. Unité de séparation selon l'une au moins des revendications précédentes,
**caractérisée en ce que**
le logement d'élément d'assemblage (12) comprend un guidage pour l'élément d'assemblage (10) logé par le logement d'élément d'assemblage (12), guidage qui sert à guider l'élément d'assemblage (10) pendant sa rotation.

6. Unité de séparation selon la revendication 5,
**caractérisée en ce que**
le guidage réalise une voie de guidage (58) le long de laquelle se déplace la tête (14) de l'élément d'assemblage (10) pendant la rotation de l'élément d'assemblage (10).

7. Unité de séparation selon la revendication 6,
**caractérisée en ce que**
la voie de guidage (58) s'étend au moins partiellement en forme de cercle autour de l'élément de rotation (20).

8. Unité de séparation selon la revendication 6 ou 7,
**caractérisée en ce que**
la voie de guidage (58) est formée par deux parois de guidage (60) qui sont orientées au moins approximativement parallèlement l'une à l'autre et qui logent entre elles la tige (16) d'un élément d'assemblage (10) logé dans le logement d'élément d'assemblage (12).

9. Unité de séparation selon l'une au moins des revendications 6 à 8,
**caractérisée en ce que**
le logement d'élément d'assemblage (12) présente une échancrure (62) pour l'élément d'assemblage (10) sur un côté de l'élément de rotation (20) opposé à la voie de guidage (58).

10. Unité de séparation selon l'une au moins des revendications 2 à 9,
**caractérisée en ce que**
un prolongement (52) qui s'étend au moins approximativement parallèlement à une direction de translation du coulisseau (18) est réalisé sur le coulisseau (18) et est susceptible d'être amené en engagement avec l'élément d'assemblage (10) lors d'une translation du coulisseau (18) depuis la position de réception jusque dans la position de distribution.

11. Unité de séparation selon la revendication 10,
**caractérisée en ce que**
le prolongement (52) présente une échancrure (64) pour l'élément d'assemblage (10) sur un côté inférieur tourné vers l'élément de rotation (20).

12. Unité de séparation selon l'une au moins des revendications 2 à 11,
**caractérisée en ce que**
un verrou (40), en particulier un verrou (40) qui s'étend au moins approximativement parallèlement à une direction de mouvement du coulisseau (18), est réalisé sur le coulisseau (18) et, pendant un mouvement du coulisseau (18) jusque dans sa position de distribution, il bloque une ouverture d'entrée (38) du logement d'élément d'assemblage (12) pour empêcher un autre élément d'assemblage (10) d'y entrer.

13. Unité de séparation selon l'une au moins des revendications 2 à 12,
**caractérisée en ce que**
le logement d'élément d'assemblage (12) présente une ouverture de distribution (44) par laquelle l'élément d'assemblage (10) logé par le logement d'élément d'assemblage (12) peut être distribué dans la position de distribution du coulisseau (18).

14. Unité de séparation selon l'une au moins des revendications précédentes,
**caractérisée en ce que**
le coulisseau (18) est monté mobile en translation sur le logement d'élément d'assemblage (12) à l'aide d'un moyen de guidage (34).
